Europäisches Patentamt

European Patent Office

Office européen des brevets

(11) Veröffentlichungsnummer: **0 324 349**
**A2**

(12) **EUROPÄISCHE PATENTANMELDUNG**

(21) Anmeldenummer: **89100037.4**

(22) Anmeldetag: **03.01.89**

(51) Int. Cl.⁴: **G01D 5/26**

(30) Priorität: **09.01.88 DE 3800410**

(43) Veröffentlichungstag der Anmeldung:
**19.07.89 Patentblatt 89/29**

(84) Benannte Vertragsstaaten:
**AT BE CH DE ES FR GB GR IT LI LU NL SE**

(71) Anmelder: **Conducta Gesellschaft für Mess-
und Regeltechnik mbH & Co.
Dieselstrasse 24
D-7016 Gerlingen b. Stuttgart(DE)**

(72) Erfinder: **Gündner, Hans Martin, Dr.
Wartbergweg 1
D-7142 Marbach(DE)**

(74) Vertreter: **Otte, Peter, Dipl.-Ing.
Tiroler Strasse 15
D-7250 Leonberg(DE)**

(54) **Verfahren und Vorrichtung zur Messwertübertragung bei elektrochemischen Sensoren.**

(57) Bei einem System zur Übertragung der Ausgangsmeßwerte elektrochemischer Sensoren, Temperaturmeßgebern o.dgl. wird vorgeschlagen, zwischen einer Vorortelektronik mit dem jeweiligen Meßwertgeber und einer Auswerteschaltung ein optisches Verbindungskabel (Lichtleiter) anzuordnen und ein primäres (Laserlicht)Strahlenbündel von einem an einem Ende des optischen Faserkabels angeordneten (Laserlicht)Senders einer Vorortelektronik am anderen Ende des optischen Faserkabels zuzuführen, wobei über eine Verzweigung eine vorgegebene Strahlungsmenge abgezweigt und einem optoelektronischen Wandler zugeführt wird, der eine so hinreichende elektrische Ausgangsspannung erzeugt, daß das Meßsignal des elektrochemischen Sensors aktiv aufbereitet und in einem Modulationssignal umgewandelt werden kann. Durch Beaufschlagung eines elektrisch optischen Modulators wird ein Teil der primären (Laserlicht)Strahlungsenergie moduliert, gelangt über das gleiche verbindende optische Faserkabel oder ein zweites Faserkabel zurück und wird anschließend ausgewertet.

Fig.1

## Verfahren und Vorrichtung zur Meßwertübertragung bei elektrochemischen Sensoren

Stand der Technik

Die Erfindung geht aus von einem Verfahren nach dem Oberbegriff des Anspruchs 1 bzw. der Vorrichtung nach dem Oberbegriff des Anspruchs 4.

Es ist bekannt, daß elektrochemische Sensoren, aber auch andere Meßwertgeber beliebiger Art nur sehr kleine elektrische Signale (in Form von Spannungen oder Strömen) abgeben können, bei unter Umständen extrem hochohmigen Quellwiderständen. Ferner ergibt sich nicht selten der Umstand, daß der Betrieb solcher Sensoren in typisch starken, elektromagnetischen Störfeldern realisiert werden muß. Dies führt zu der Notwendigkeit, durch eine aufwendige Verkabelung und sonstige Schutzmaßnahmen die meist im mV-Bereich liegenden Meßsignale zu übertragen.

Kommt hierzu noch die Notwendigkeit der Potentialtrennung für Geräte in Ex-Ausführung, d.h. ist ein Einsatz in explosionsgefährdeter Umgebung erforderlich, dann muß ein besonders hoher Aufwand an Auswerteschaltungen, bei den Mitteln zur Potentialtrennung und in Form spezieller Kabelstrukturen betrieben werden. Etwas ähnliches ergibt sich bei einem Betrieb in aggressiver oder korrosiver Umgebung, wie dies beim Einsatz elektrochemischer Sensoren geradezu typisch ist, so daß besonders widerstandsfähige Kabel verwendet und Vorkehrungen gegen ein Eindringen von Feuchtigkeit oder Gasen getroffen werden müssen.

Andererseits sind die Vorteile der Verwendung von optischen Fasern für die Signalleitung, auch bei der Meßwertübertragung u.dgl. bekannt, die darin besteht, daß eine inhärente Potentialfreiheit vorliegt, daß die optischen Fasern gegen elektromagnetische Störungen völlig unempfindlich sind und daß kleine und leichte Kabel, die darüber hinaus resistent gegen aggressive Chemikalien, Feuchtigkeit und Korrosion sind, Verwendung finden können.

Es ist daher auch bekannt, solche Sensorelemente, deren optische Eigenschaften sich in Abhängigkeit von der zu messenden Größe ändern, z.B. optische Dichte, Farbe, Ausbreitungsgeschwindigkeit u.dgl., in Verbindung mit dem Einsatz optischer Fasern als Signalleitungen zu verwenden. Solche Sensoren mit optischen, sich in Abhängigkeit zum Meßsignal ändernden Eigenschaften bzw. mit Eigenschaften, die so ausgenutzt werden können, daß sie meßsignalabhängig einer Veränderung unterworfen werden, können als passive Mittel bezeichnet werden, um eine Meßwertübertragung über optische Fasern zu ermöglichen, wobei die optische Faser die Signalleitung bildet.Es ist auch möglich, daß sich die Eigenschaften der Faser selbst in Abhängigkeit von der zu messenden Größe ändern, so daß die Faser sowohl als Sensorelement wie auch als Signalleitung wirkt.

Durch die sich meßwertabhängig ändernden Eigenschaften können beispielsweise die Ausbreitungsbedingungen in einer optischen Faser beeinflußt werden, etwa Änderung der Absorption oder der Phase; auch kann eine Anregung von Fluoreszenz, Lumineszenz oder ähnliches stattfinden. Solche passiven Sensorelemente beeinflussen die optische Welle direkt; sie haben aber auch den Nachteil, daß die bisher verfügbaren Sensorelemente dieser Art bei weitem nicht an Meßgenauigkeit und die Anwendungsbreite von elektrochemischen Sensoren bekannter Bauart heranreichen. Die meisten solcher passiven Sensorelemente sind bisher nur als Labormuster unter speziellen Prüfbedingungen einsatzfähig und insoweit für den allgemeinen Bereich der elektrochemischen Meßtechnik nicht verfügbar.

Der Erfindung liegt daher die Aufgabe zugrunde, ein Verfahren und eine Vorrichtung anzugeben, die einerseits den Einsatz üblicher elektrochemischer Sensoren ermöglicht, also von deren Meßgenauigkeit und Anwendungsbreite profitiert, andererseits aber sicherstellt, daß die Übertragung der gewonnenen Meßwerte so problemlos erfolgen kann, wie dies nur eine faseroptische Übertragung ermöglicht.

Vorteile der Erfindung

Die Erfindung löst diese Aufgabe mit den kennzeichnenden Merkmalen des Hauptanspruchs und hat den überraschenden Vorteil, daß trotz der Notwendigkeit, am Erzeugungsort des Meßsignals aufgrund der bekannten Eigenschaften elektrochemischer Sensoren ein elektrisches Signal erfassen, auswerten und aufbereiten zu müssen, ohne daß an dieser Stelle eine elektrische Versorgungsquelle zur Verfügung steht, die Meßsignalübertragung mit Hilfe einer einzigen, faseroptischen Signalleitung gelingt, so daß auch in diesem Falle die Vorteile der optischen Faser wie inhärente Potentialfreiheit, Unempfindlichkeit gegen elektromagnetische Störungen und kleine leichte Kabel mit hoher Resistenz gegen aggressive Chemikalien, Feuchtigkeit, Korrosion und Beschädigungen voll zur Auswirkung kommen können.

Der Erfindung gelingt es daher, über die eine optische Signalleitung einmal die erforderliche Energie an den Erfassungsort des Meßsignals zu übertragen, die notwendig ist, um an dieser Stelle ein gewonnenes elektrisches Signal so umzusetzen, daß dessen Übertragung in optischer Form, jedenfalls mittels einer elektrischen Lichtwelle im faseroptischen Kabel, üblicherweise als Laserlicht,möglich ist und andererseits das gleiche optische Kabel Licht in meßsignalmodulierter Form von der Meßstelle rücküberträgt zum Auswertebereich. Es versteht sich aber,daß auch getrennte Fasern zur Hinleitung der Energie und zur Rückübertragung des Meßsignals einsetzbar sind.

Eine vorteilhafte Anwendung findet daher vorliegende Erfindung insbesondere für solche Sensoren, die sehr kleine und wenig belastbare elektrische Signale etwa im mV-Bereich oder im Nanoampere-Bereiche liefern, wie dies bei potentiometrischen oder ampereometrischen Messungen in der analytischen Chemie normalerweise der Fall ist.

Durch die in den Unteransprüchen aufgeführten Maßnahmen sind vorteilhafte Weiterbildungen und Verbesserungen der Erfindung möglich. Besonders vorteilhaft ist zur sicheren Modulation der optischen Leistung mit dem Meßsignal an der Meßstelle der Einsatz digitaler Verarbeitungsverfahren, wodurch Schwankungen in der Übertragungsdämpfung, beispielsweise durch zusätzliche optische Stecker, Fluktuationen der Sendeleistung, Alterung u.dgl. unwesentlich werden. Durch die digitale Modulation des Übertragungsmediums Licht in der optischen Faser lassen sich insbesondere die Impulsfrequenz und das Impulstastverhältnis eines Impulszuges vorteilhaft für die Meßsignalübertragung einsetzen.

## Zeichnung

Ein Ausführungsbeispiel der Erfindung ist in der Zeichnung dargestellt und wird in der nachfolgenden Beschreibung näher erläutert. Es zeigen:

Fig. 1 stark schematisiert eine mögliche Ausführungsform des Grundprinzips der faseroptischen Übertragung von durch den Einsatz elektrochemischer Sensoren gewonnener elektrischer Meßwerte;

Fig. 2 eine mögliche Ausführungsform einer Modulatoranordnung für die Umwandlung des an der Meßstelle entstehenden elektrischen Signals in ein meßsignalmoduliertes optisches Signal und

Fig. 3 eine mögliche Ausführungsform eines optisch-elektrischen Wandlers zur Erzeugung der für Auswerteschaltung und Modulator am Meßort erforderlichen Versorgungsspannung.

## Beschreibung der Ausführungsbeispiele

Der Grundgedanke vorliegender Erfindung besteht darin, auf der Basis einer aktiven Meßsignalverarbeitung die Meßgröße in der für elektrochemische Sensoren für sich gesehen bekannten Weise in ein elektrisches Signal umzusetzen, dieses in ein geeignetes Modulationssignal umzusetzen und nachfolgend eine optische Welle so zu beeinflussen, daß diese über die gleiche optische Faser oder eine zweite Faser das Meßsignal zur Auswertestelle rücküberträgt, über welche von der Auswertestelle Licht (Laserlicht) zunächst lediglich als Medium zur Energiegewinnung und zur Bereitstellung des Modulationsträgers zum Meßort übertragen worden ist. Der jeweilige elektrochemische Sensor ist daher über eine aus optischen Fasern bestehende Versorgungsleitung zur Energieversorgung und zur Signalaus wertung mit einer Lichtquelle verbunden, wobei gleichzeitig Mittel vorgesehen sind, die an der Meßstelle (Sendeort des aktivmodulierten Lichtsignals) elektrische Energie bereitstellen und die am Empfangsort, beispielsweise im Bereich des primären Lichtsenders (Laser) durch Auswertung des modulationsbehafteten Lichtquellenanteils das Meßsignal erfassen.

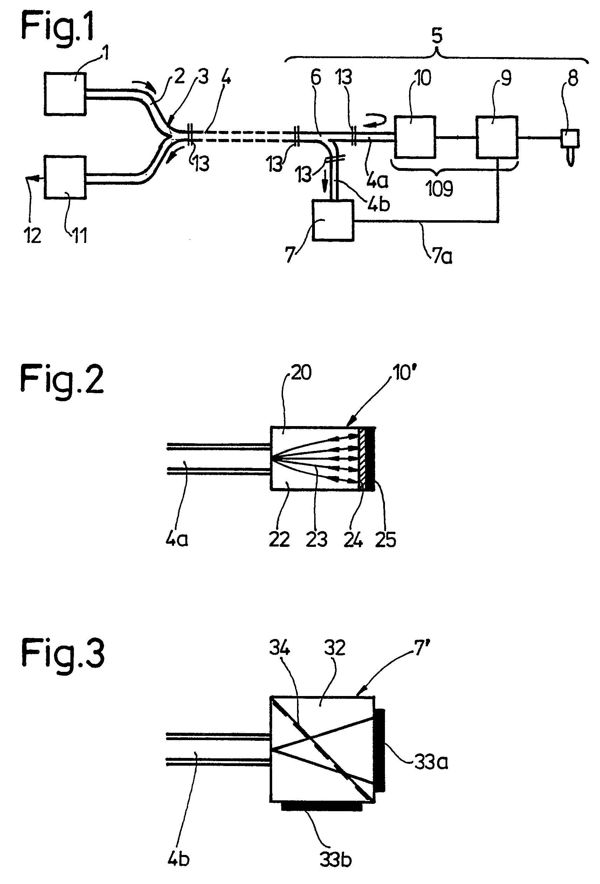

Bei der in Fig. 1 gezeigten prinzipiellen Anordnung ist die optische (primäre) Strahlungsquelle mit 1 bezeichnet. Diese Strahlungsquelle 1, die vorzugsweise ein Halbleiterlaser geeigneter Ausführung und Sendeleistung ist, speist seine Strahlung in eine optische Faser 2 ein, von welcher die Strahlung über eine erste Verzweigung 3, die von bei optischen Fasern bekannter Art und Aufbau sein kann, in das optische Faserkabel 4 gelangt, welches über im Grunde beliebige Entfernungen geführt schließlich in den Bereich des Vorort-Meßaufnehmers 5 gelangt, also zur jeweiligen Meßstelle.

Über eine zweite Verzweigung 6 wird ein Teil der Strahlungsleistung vom primären (Laser)-Lichtsender 1 zu einem optoelektrischen Wandler 7 geführt, der so ausgelegt ist, daß er aus der ihm zugeführten Lichtenergie elektrische Energie in so hinreichendem Maße und mit so hinreichender Spannungshöhe erzeugt, daß er über seine Ausgangsleitung 7a die am Meßort vorhandene Elektronik (Vorortelektronik 109) mit der erforderlichen elektrischen Leistung versorgen kann.

Das Meßsignal des eigentlichen elektrochemischen Sensors 8, der von beliebiger Form und Ausgestaltung sein kann, beispielsweise eine pH-Sonde, eine Chlorsonde o.dgl. ist, gelangt zu einem ersten Elektronikbaustein 9 der Vorortelektronik 109 und wird von diesem Elektronikbaustein in ein geeignetes Modulationssignal umgesetzt, welches so beschaffen ist, daß es einen nachgeschalteten elektrisch-optischen Modulator 10 ansteuern kann. Dieser elektrisch-optische Modulator 10 moduliert dann die ihm von der Verzweigungsstelle 6 zugeführte Lichtstrahlung in geeigneter Weise, beispielsweise nach Betrag, Phase, Wellenlänge, wobei die Modulation nach Betrag auch eine entsprechende Umsetzung in geeignete Pulscode-Modulationsverfahren umfaßt, mit möglicher Auswertung des Tastverhältnisses beispielsweise.

Die von dem Modulator 10 modulierte Lichtstrahlung, die, wie weiter vorn schon erwähnt, vorzugsweise eine Laserlichtstrahlung ist, gelangt dann über den Verzweiger zurück auf das gleiche optische Faserkabel 4, über welches auch die primäre Laserlichtstrahlung von der Strahlungsquelle 11 zum Vorortmeßaufnehmer 5 geführt ist. Über den schon erwähnten Verzweiger 3 gelangt die modulierte Strahlung zu einem Empfänger 11, der eine für sich gesehen bekannte Struktur und Funktion haben kann und das ihm zugeführte modulierte Lichtstrahlungssignal in ein weiterverarbeitbares, elektrisches Ausgangssignal zurückwandelt.Wahlweise kann die Rückleitung des modulierten Signales über eine zweite Faser erfolgen, was den Vorteil geringerer Systemdämpfung ergibt.

Das optische Kabel kann in bekannter Weise Steckverbindungen 13, beispielsweise vor und hinter den Verzweigungsstellen 3 und 6 aufweisen, auch um Verlängerungsfaserkabel anzuschließen. Aufgrund der extrem geringen Dämpfung heutiger optischer Faserkabel ist es daher möglich, das modulierte Meßsignal über sehr große Entfernungen, auch im Bereich von mehreren Kilometern,und mit zwischengeschalteten Verstärkern noch über größere Entfernungen, zu führen.

Neben dieser grundsätzlichen Ausbildung ist es bei einer solchen Art der Energieversorgung und Signalauswertung elektrochemischer Sensoren über optische Fasern sinnvoll und unter Umständen auch erforderlich, aufgrund der nur geringen verfügbaren optischen Leistung im Bereich des Vorortmeßaufnehmers 5 besondere Maßnahmen zu einer leistungssparenden Signalverarbeitung zu treffen, was hauptsächlich die Aufbereitungselektronik 9 für das Sensorsignal betrifft. Es ist aber möglich und soll hier nur als Hinweis gelten, beispielsweise mit aus der Uhrenindustrie bekannten Techniken integrierter CMOS-Schaltungen eine geeignete Technologie zu verwenden, die in der Lage ist, mit Versorgungsspannungen zwischen 1 und 2 Volt und wenigen µA Stromaufnahme zuverlässig zu arbeiten. Auf diese Weise läßt sich im Aufbereitungsbaustein 9 mittels solcher CMOS-Schaltungen etwa mittels Verstärker,wobei hier natürlich auch andere Schaltungen Verwendung finden können, das Ausgangssignal des elektrochemischen Sensors so aufbereiten, daß der nachgeschaltete Modulator 10 mit einer hinreichenden Energie beaufschlagt werden kann, die es ihm ermöglicht, die von ihm empfangene primäre Strahlungsenergie in ein entsprechend moduliertes Signal zu verwandeln und wieder auf den Rückweg zu bringen, also in das Kabel zurückzuwerfen (spiegeln) bzw. zu reflektieren.

Als Modulator 10 eignen sich daher beispielsweise Flüssigkristallzellen, auf die der primäre (Laser)Lichtstrahl auffällt und die aufgrund ihrer Eigenschaften diesen Lichtstrahl jeweils unterschiedlich, je nach Modulation reflektieren oder auch in Phase oder Wellenlänge verändern. Werden als Modulator beispielsweise elektrochrome Materialien verwendet, dann sind diese so ausgebildet, daß sie beispielsweise ihre Farbe mit anliegender Spannung verändern, wodurch sich eine Leistungsänderung im zurückgeworfenen Laserlichtbündel ergibt. Jede solche Veränderung in der zurückgeworfenen, d.h. über das optische Faserkabel 4 rückgeführten Strahlungsenergie ist als eine solche Modulation aus dem Ausgangssignal des elektrochemischen Sensors 8 zu verstehen, sofern diese Modulation in gerichteter Weise und in Abhängigkeit zu diesem Ausgangssignal erfolgt ist.

Ein mögliches Ausführungsbeispiel eines in Form eines Flüssigkristalls ausgebildeten Modulators ist in Fig. 2 gezeigt und dort mit 10' bezeichnet. Der Flüssigkristall-Modulator 10' umfaßt ein äußeres Gehäuse 20, welches eine Gradientenlinse 22 aufnimmt, an deren einem Ende die optische Faser 4a (nach der Verzweigung 6; siehe Fig. 1) angesetzt ist. Hierdurch ergibt sich ein optischer Strahlengang 23 in Hin- und Rückrichtung auf den mit 24 bezeichneten Flüssigkristall, der auf seiner zur Gradientenlinse 22 abgewandten Seite eine Reflexionsschicht 25 als Rückschicht aufweist. Je nach an dem Flüssigkristall anliegender elektrischer Spannung vom Aufbereitungsblock 9 her und daher entsprechend dem vom elektrochemischen Sensor 8 veranlaßten Veränderungen in der Flüssigkristallstruktur ergibt sich ein unterschiedliches Reflexionsverhalten auf das auf die Flüssigkristallschicht 24 von der Gradientenlinse 22 aufgeleitete Strahlenbündel, so daß nach rückwärts reflektiert ein moduliertes optisches Signal auf die optische Faser 4a und von dieser auf das Faserkabel 4 übertragen wird. Eine solche Modulatorschaltung zeichnet sich durch einen besonders geringen Leistungsbedarf aus.

Da über das optische Faserkabel 4 nur vergleichsweise geringe Energiemengen geführt werden können, ist es sinnvoll, den optoelektrischen Wandler 7 so auszulegen, daß dieser, möglichst ohne den Umweg über eine elektrische Spannungsvervielfachung, die für den Betrieb der Vorortelektronik 109 nötige Gleichspannung erzeugen kann. Eine bevorzugte Ausführungsform eines optoelektrischen Wandlers 7' ist in Fig. 3 gezeigt. Die (Laserlicht)Strahlung aus der optischen Glasfaser 4b gelangt über einen teiltransparenten Strahlungsteilerwürfel 32 mit einer mittleren, für Strahlung teildurchlässigen Trennfläche 34. Der Strahlungsteilerwürfel 32 teilt daher die eingehende Strahlung auf zwei gleiche Fotoelemente 33a, 33b auf, die in elektrischer Serienschaltung dann eine elektrische Spannung zwischen ca. 1,2 und 1,4 V erzeugen können, um hier auch numerische Werte zu nennen. Es versteht sich natürlich, daß die Erfindung hierauf, im übrigen auch auf die speziellen Ausführungsformen des Modulators 10' bzw. des optoelektrischen Wandlers 7' nicht beschränkt ist; desgleichen auch nicht auf Auswahl und Art der möglichen, verwendbaren elektrochemischen Sensoren.

Es empfiehlt sich, für die Fotoelemente 33a, 33b Silizium-Fotoelemente zu verwenden, die eine hinreichende Spannungshöhe ergeben, so daß diese für den Betrieb der in der Aufbereitungselektronik 9 vorhandenen CMOS-Schaltungen und des Modulators direkt ausreichen. Die durch den Strahlungsteilerwürfel 32 mögliche Serienschaltung der Fotoelemente 33a, 33b ist auch insofern besonders günstig, weil neben der vollen Spannung der Schaltungspunkt bzw. der Mittenspannungsabgriff zur halben Spannung zugänglich ist, wodurch besonders der Anschluß beispielsweise von pH-Meßketten erleichtert wird, die in typischer Weise Spannungen etwa im Bereich zwischen -400 mV und + 400 mV liefern.

Es wird noch darauf hingewiesen, daß für die Modulation der Lichtenergie (optischen Leistung) sich im Grundsatz sowohl analoge als auch digitale Verfahren eignen. Allerdings sind die erzielbaren Änderungen vergleichsweise gering, so daß eine digitale Modulation sicher bevorzugt ist. Durch eine digitale Modulation gelingt es auch, Schwankungen der Übertragungsdämpfung (die durch zusätzliche optische Stecker, durch Fluktuation der Sendeleistung oder Alterung verursacht sein kann) in den Griff zu be kommen, so daß diese unwesentlich werden.

Als digitales Modulationsschema sind unter dem Gesichtspunkt einer einfachen Signalwandlung besonders die Änderung der Impulsfrequenz und des Impulstastverhältnisses eines durch die Modulation erzeugten Impulszuges der Lichtstrahlung vorteilhaft. Beide Verfahren können kombiniert werden und sie sind mit der Niedrigspannung-CMOS-Technologie besonders gut verträglich und auch realisierbar. Da sehr häufig am Meßort nicht nur ein Meßsignal, sondern mehrere erfaßt werden müssen, beispielsweise bei der pH-Messung zugleich eine Temperaturangabe erwünscht, unter Umständen sogar erforderlich ist, gelingt es mit einem solchen Modulationsverfahren, in einfacher Weise die Temperatur beispielsweise über die Pulsfrequenz und den pH-Wert über das Tastverhältnis zu codieren und dem Empfänger 11 zur Demodulation und weiteren Auswertung zuzuführen.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Verfahren zur Meßwertübertragung bei elektrochemischen Sensoren beliebiger Art, insbesondere pH- oder Redox-Elektroden, Chlormeßzellen, Sauerstoffmeßzellen, Temperaturmeßgeber u.dgl., die über die Meßsignale führenden Leitungen mit einer Auswerteschaltung verbunden sind, dadurch gekennzeichnet, daß ein optischer Lichtsender eine primäre (Laser)Lichtstrahlung über ein optisches Faserkabel einem Vorort-Meßaufnehmer (5) zuführt, daß am Meßort über eine Verzweigung des optischen Faserkabels (4) eine Teilenergiemenge einer opto-elektrischen Wandlung zugeführt wird, daß eine weitere Teilenergiemenge auf einen elektrisch-optischen Modulator (10) auftrifft und daß dieser elektrisch-optische Modulator (10) so von einem mit Hilfe der durch die opto-elektrische Wandlung gewonnenen elektrischen Energie aufbereiteten, auf der Grundlage des Meßsignals des elektrochemischen Sensors gebildeten Modulationssignals beaufschlagt ist, daß sich eine vom Modulator (10) auf das verbindende optische Faserkabel (4) rückübertragene, nach Betrag, Phase, Wellenlänge, Impulsfrequenz, Impulstastverhältnis u.dgl. modulierte optische Teilenergie-Strahlungsmenge ergibt, die von einem Empfänger (11), der zusammen mit dem pri mären Lichtsender über eine Verzweigung an das optische Faserkabel (4) angeschlossen ist, ausgewertet wird.

2. Verfahren nach Anspruch 1, dadurch gekennzeichnet, daß zur Signalrückführung eine getrennte Faser verwendet wird.

3. Verfahren nach Anspruch 1, dadurch gekennzeichnet, daß zur opto-elektrischen Wandlung das zugeführte primäre (Laserlicht)Strahlenbündel aufgespalten und mehreren Fotozellen (33a, 33b) zugeführt wird, deren Ausgangssignale zur Spannungserhöhung in Reihe geschaltet werden.

4. Verfahren nach Anspruch 1 bis 3, dadurch gekennzeichnet, daß eine mit dem Meßsignal zu modulierende (Laserlicht)Teilstrahlungsmenge auf eine Flüssigkristallschicht (24) geworfen wird, deren Reflexions- oder Transmissionseigenschaften sich mit dem aus dem Ausgangssignal des elektrochemischen Sensors (8) abgeleiteten Modulationssignal ändern.

5. Vorrichtung zur Meßwertübertragung bei elektrochemischen Sensoren beliebiger Art, insbesondere pH-, Redox-, Chlor-, Sauerstoff-Meßsonden, Temperaturmeßgebern u.dgl., wobei das Meßsignal vom jeweiligen Geber zur Auswerteschaltung über eine Verbindungsleitung gelangt, dadurch gekennzeichnet, daß ein ein primäres (Laser)-Lichtbündel erzeugender Lichtsender (1) vorgesehen ist, daß der Lichtsender auf ein optisches Faserkabel (4) arbeitet, an dessen Ende über eine Verzweigung (6) ein opto-elektrischer Wandler (8, 7') sowie ein elektrisch optischer Modulator (10) angeschlossen sind und daß die durch eine Umsetzung der zugeführten optischen Primärenergie gewonnene Ausgangsspannung des opto-elektrischen Wandlers (7) der elektrischen Versorgung der Vorortelektronik (109) dient, die das Meßsignal in ein den elektrisch-optischen Modulator (10) beaufschlagendes Modulationssignal umwandelt.

6. Vorrichtung nach Anspruch 5, dadurch gekennzeichnet,daß der (Laserlicht)Sender (1) und die das rückgeführte modulierte Strahlenbündel auswertende Schaltung (11) über eine Verzweigung (3) mit dem in Richtung auf die Vorortelektronik (5) das primäre (Laserlicht)Strahlenbündel und in Rückrichtung die modulierte (Laserlicht)Strahlung transportierenden einen optischen Faserkabel verbunden sind.

7. Vorrichtung nach Anspruch 5, dadurch gekennzeichnet,daß die modulierte Laserstrahlung über eine zweite Faser zum Empfänger (11) zurückgeleitet wird.

8. Vorrichtung nach Anspruch 5 bis 7, dadurch gekennzeichnet, daß der opto-elektrische Wandler (7, 7') optische Strahlungsteilungsmittel (Strahlungsteilerwürfel 32) für das eingehende primäre (Laserlicht)Bündel aufweist, von denen ausgehend die aufgeteilten Lichtenergien auf mindestens zwei Fotoelemente (33a, 33b) geführt sind, deren elektrische Ausgangsanschlüsse in Reihe geschaltet sind mit einem herausgeführten Mittenspannungsanschluß.

9. Vorrichtung nach Anspruch 8, dadurch gekennzeichnet, daß Silizium-Fotoelemente auf den beiden Außenseiten des Strahlungsteilerwürfels (32) angeordnet sind und daß der Strahlungsteilerwürfel eine Strahlung teilweise durchlassende und teilweise ablenkende Trennschicht (34) aufweist.

10. Vorrichtung nach einem der Ansprüche 5 bis 9, dadurch gekennzeichnet, daß der elektrisch-optische Modulator eine Flüssigkristallzelle oder elektrochrome Materialien enthält, die ihre optische Dichte oder Farbe mit anliegender Spannung ändern und daß ein anderer Teil des primären (Laserlicht)Strahlenbündels vom elektrisch-optischen Modulator (10, 10') aufgefangen und von diesem nach Modulation in das optische Faserkabel (4) zurückreflektiert wird oder in ein zweites Faserkabel zur Signalrückleitung eingespeist wird.

11. Vorrichtung nach Anspruch 10, dadurch gekennzeichnet, daß der elektrisch-optische Modulator (10, 10') eine auf ihrer einen Seite mit dem eine optische Teillichtmenge führenden Verzweigungskabel verbundene Gradientenlinse (22) aufweist, an deren anderem Ende eine Flüssigkristallschicht (4) angeordnet ist, deren Reflexionseigenschaften vom aufbereiteten Meßsignal beeinflußt sind und daß hinter der Flüssigkristallschicht (24) eine Reflexionsschicht (25) angeordnet ist.

12. Vorrichtung nach einem der Ansprüche 5 bis 11,dadurch gekennzeichnet, daß die vom opto-elektrischen Wandler (7) mit elektrischer Energie versorgte Vorortelektronik (5) einen integrierte CMOS-Schaltungen enthaltenden Aufbereitungselektronikblock (9) umfaßt, von dessen Ausgang das aufbereitete Modulationssignal auf den elektrisch optischen Wandler (10, 10') gelangt.

# Fig.1

# Fig.2

# Fig.3